# EUROPÄISCHE PATENTSCHRIFT

(11) **EP 1 880 907 B1**
(45) Veröffentlichungstag und Bekanntmachung des Hinweises auf die Patenterteilung: **15.07.2009**
(21) Anmeldenummer: 07112598.3
(22) Anmeldetag: 17.07.2007
(51) Int. Cl.: B60R 21/34

(54) **Vorrichtung zum aktiven Aufstellen der Fronthaube eines Kraftfahrzeuges bei einem drohenden Personenaufprall**
Device for active opening of the bonnet of a motor vehicle in the case of imminent collision
Dispositif destiné à mettre activement le capot avant d'un véhicule automobile en cas de choc de personne menaçant

(30) Priorität: 21.07.2006 DE 102006033720
(43) Veröffentlichungstag der Anmeldung: 23.01.2008
(73) Patentinhaber: ISE Automotive GmbH, 51702 Bergneustadt (DE)
(72) Erfinder: Janisch, Mirko, 53797 Lohmar (DE); Liesaus, Frank, 51702 Bergneustadt (DE)
(74) Vertreter: Fuchs

(56) Entgegenhaltungen:
- EP-A- 1 431 136
- EP-A- 1 659 038
- DE-A1- 19 957 872
- JP-A- 11 099 906
- US-B1- 6 439 330

## Beschreibung

Die Erfindung bezieht sich auf eine Vorrichtung zum Schutz von Personen bei einem Frontalaufprall auf ein Kraftfahrzeug durch aktives Aufstellen dessen im Windschutzscheibenbereich durch zwei Eingelenkscharniere angeschlagene Fronthaube entsprechend dem Oberbegriff des Anspruchs 1.

Eine Vorrichtung nach dem Oberbegriff des Anspruchs 1 geht aus der JP 11 099 906 (Fig. 17-18) hervor.

Jährlich ereignen sich zahlreiche Unfälle, bei denen Fußgänger, seien es Kinder oder Erwachsene, bzw. Zweiradfahrer oder Skater, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweiradfahrers gefährdet, da dieser bei einem Zusammenprall mit einem Kraftfahrzeug - wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie an dem Problem, den Personenschutz insoweit zu verbessern.

Es ist eine Reihe von Möglichkeiten zur Lösung dieses Problems bekannt geworden. Ein sich immer mehr durchsetzendes Lösungsprinzip besteht darin, den vorgenannten harten Übergangsbereich zur Windschutzscheibe zu entschärfen, d. h. nachgiebiger zu gestalten, insbesondere durch eine mittels eines Aufprall-Sensors betätigte Vorrichtung zur Anhebung der Fronthaube im vorgenannten Übergangsbereich aus einer Ruheposition in eine demgegenüber angehobene, nachgiebige Aufprallposition, d. h. durch eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Es sind zahlreiche Konstruktionen, z.B. diejenige nach der DE 197 12 961 A1, für einen Aufprallschutz nach dem vorgenannten Prinzip der aktiven Fronthaube bekannt geworden. Sie stellen darauf ab, dass die jeweilige windschutzscheibenseitige Scharnieranordnung über einen schwenkbar oder verschiebbar gelagerten Scharnierträger so an der Karosserie des Vorderwagens befestigt ist, dass im Falle einer drohenden Kollision des Fahrzeuges mit einer Person die Fronthaube samt der auf dem Scharnierträger montierten Scharnieranordnung angehoben werden kann.

Zum aktiven Aufstellen der Fronthaube dienen Aufstellelemente, die ein karosseriefest angebrachtes Unterteil und ein darin aufstellbar geführtes Hubelement in Verbindung mit einem Energiespeicher besitzen, der durch einen sensorgesteuerten Aktuator im Fall eines drohenden Unfalles auslösbar ist und dabei das Hubelement mit der Fronthaube um einen vorgegebenen Arbeitshub aufstellt.
Der Stand der Technik zeigt eine Reihe von Konstruktionen für diese Aufstellelemente, die typischerweise als Energiespeicher einen Federspeicher in Form einer vorspannbaren Schraubenfeder-Anordnung oder einen pyrotechnischen Gasgenerator besitzen.

Bei Schutzvorrichtungen, die nach dem vorgenannten Prinzip arbeiten, ist es daher notwendig, das gesamte Scharnier über den zugeordneten Scharnierträger aufzustellen, was zahlreiche Bauteile für die Konstruktion notwendig macht und außerdem im Hinblick auf das relativ hohe Gewicht des Scharniers, insbesondere wenn ein ViergelenkScharnier vorliegt, einen starken und damit teuren Energiespeicher notwendig macht.

Es sind daher durch die WO 2004/094204 A1 und die DE 10 2004 062 105 A1 auch Vorrichtungen bekannt geworden, bei denen das Scharnier jeweils als Eingelenkscharnier mit zwei Scharnierflügeln ausgebildet ist, einem einteiligen karosseriefest angebrachten unteren Scharnierflügel und einem mit der Fronthaube verbundenen oberen, zweigeteilten Scharnierflügel, die beide an einem gemeinsamen, fahrzeugfesten Scharniergelenk-Drehpunkt angelenkt sind, von denen der zweigeteilte obere Scharnierflügel einen vorderen, als Befestigungsflansch für die Fronthaube ausgebildeten Flügelteil und einen hinteren am gemeinsamen Drehpunkt angelenkten Scharnierflügelteil aufweist, und beide Scharnierflügelteile über ein Gelenk miteinander gekoppelt sind, welches über einen Schalter feststellbar und freigebbar ist, wobei ein Ernergiespeicher zum Aufstellen eines der oberen Scharnierflügelteile und eine Aktuatoreinheit zum sensorgesteuerten Auslösen des Energiespeichers vorgesehen ist.

Bei einer derartigen Konstruktion ist das Scharnier sehr einfach ausgebildet, ein gesonderter Scharnierträger entfällt und es muss nicht das gesamte Scharnier, sondern nur ein Teil des oberen Scharnierflügels aufgestellt werden, was u.a. den Energiespeicher entlastet.

Bei beiden vorgenannten Schriften ist die Vorrichtung so ausgebildet, dass nicht nur beim normalen Öffnen der Fronthaube in die Servicestellung, sondern auch beim Anheben der Fronthaube bei einem drohenden Unfall beide Scharnierflügel in dem gemeinsamen Scharniergelenk-Drehpunkt angelenkt bleiben.

Durch die DE 101 16 716 A1 ist ein einschlägiges Eingelenkscharnier bekannt geworden, das ebenfalls zwei Scharnierflügel aufweist, einen einteiligen, an der Karosse des Vorderwagens fest angebrachten unteren Scharnierflügel und einen ebenfalls einteiligen, mit einem Befestigungsflansch die Fronthaube tragenden oberen Scharnierflügel. Dieser weist windschutzscheibenseitig einen als Scharniergelenk-Achse dienenden Zapfen auf, der in eine am unteren Scharnierflügel ausgebildete, horizontal verlaufende Langlochführung eingreift. Diese besitzt an ihrem windschutzseitigen Ende auf ihrer der Fronthaube zugewandten Seite eine Öffnung, an welcher der Zapfen in der Schließstellung positioniert ist. An dem oberen Scharnierflügel ist ferner im vorderen Abschnitt der Kopf eines Hubelementes eines Aufstellelementes mit Energiespeicher in Form einer Kolben/ZylinderEinheit angelenkt, die mit ihrem unteren Ende am unteren Scharnierflügel angelenkt ist.

Beim normalen Öffnen der Fronthaube in die Servicestellung gleitet der Zapfen in der Langlochführung bis an die der Windschutzscheibe abgewandte Seite, währenddessen er im Crashfall aus der Öffnung der Langlochführung herausgedrückt und damit der obere Scharnierflügel mit der Fronthaube in die Aufprallposition angehoben wird. Bei diesem bekannten Konstruktionsprinzip wird daher im Crashfall der einteilig ausgebildete obere Scharnierflügel vollständig von dem unteren Scharnierflügel gelöst und danach angehoben, ein Prinzip, von welchem auch die Erfindung ausgeht.

Da das Hubelement im relativ großen Abstand zu der Scharniergelenk-Achse am oberen Scharnierflügel angreift sowie im Hinblick auf die nicht gesicherte Position der Scharniergelenkachse, d.h. des Bolzens, in der Öffnung der Langlochführung, ist die Kinematik der Bolzenbewegung relativ unbestimmt, nicht zuletzt auch wegen der notwendigen engen Toleranzen in der Langlochführung und der zugehörigen Öffnung in Bezug auf die Bolzenabmessungen. Es besteht daher einmal die Gefahr einer Fehlbewegung beim Aufstellen und Öffnen der Fronthaube und zum anderen eines ungewollten Herausspringens der Scharniergelenk-Achse aus der Öffnung der Langlochführung durch Erschütterungen. Darüber hinaus kann ein "Flattern" der Fronthaube während der Fahrt, insbesondere bei hohen Geschwindigkeiten, auftreten. Da die Scharniergelenk-Achse nicht lagefest ist, sondern beim Öffnen der Haube in dem Langloch über eine vorgegebene Strecke verschoben wird, entsteht insoweit einmal ein Totraum im Scharnierbereich und zum anderen muss die beidseitige Führung des Bolzens im Langloch konstruktiv berücksichtigt werden.

Ferner wird mit Nachteil beim normalen Öffnen der Fronthaube das Hubelement konstruktionsbedingt mit ausgezogen. Dadurch ist ein besonders ausgestaltetes, d.h. aufwändiges und damit teures Aufstellelement mit einem Aktuator, der einen Leerhub fahren kann, notwendig.

Der Erfindung liegt die Aufgabe zugrunde, ausgehend von der eingangs bezeichneten Vorrichtung diese so auszubilden, dass mit hoher Sicherheit die an einem der beiden Scharnierflügel gelagerte Scharniergelenk-Achse nur im Crashfall von dem anderen Scharnierflügel trennbar ist und die Bewegung des Hubelementes des Aufstellelementes von der Bewegung der Fronthaube bei ihrer normalen Öffnung in die Servicestellung entkoppelt ist.

Die Lösung dieser Aufgabe gelingt bei einer Vorrichtung gemäß Anspuch 1.

Die erfindungsgemäßen Maßnahmen haben eine Reihe von Vorteilen zur Konsequenz:

Da bei der erfindungsgemäßen Schutzvorrichtung die Scharniergelenk-Achse und der Anlenkpunkt des Hubelementes zusammenfallen, ist eine eindeutige Kinematik beim Anheben der Fronthaube gegeben.

Dadurch, dass der Scharniergelenk-Drehpunkt ortsfest ist, ist kein Verschiebe-Totraum, d.h. keine Langlochführung im unteren Schamiergelenkflügel notwendig.

Die nur im Crasfall selbsttätig Lagesicherung der Scharniergelenkachse gewährleistet im Normalbetrieb eine lageunveränderliche Scharniergelenk-Achse, d.h. insbesondere, dass die Fronthaube mit Sicherheit beim konventionellen Öffnen in die Servicestellung um die Scharniergelenk-Achse schwenkbar ist, ohne dass die Entsicherung im Crashfall beeinträchtigt würde.

Weitere Ausgestaltungen der Erfindung sind in Unteransprüchen gekennzeichnet und ergeben sich auch aus der Figurenbeschreibung.

### Anhand eines in den Zeichnungen beschriebenen

Ausführungsbeispieles wird die Erfindung näher beschrieben.

### Es zeigen:

- Fig. 1: in einer Seitenansicht das erfindungsgemäß mit einer Aufprallschutzeinrichtung ausgebildete Eingelenkscharnier im normalen Betriebszustand mit geschlossener Fronthaube,
- Fig. 2: in einer isometrischen Darstellung das Eingelenk-Scharnier nach Fig. 1 aus einer rückwärtigen Ansicht.
- Fig. 3: in einer gegenüber Fig. 1 um 180° gedrehten Seitenansicht mit zum Teil weggebrochenen Scharnierflügeln im Bereich der Scharniergelenk-Achse zur näheren Darstellung der lösbaren Lagersicherung der Scharniergelenk-Achse,
- Fig. 4: das Eingelenkscharnier nach Fig. 1 im ausgelösten, in die Schutzposition angehobenen oberen Scharnierflügels mit Fronthaube, und
- Fig. 5: das Eingelenkscharnier in der Position nach Fig. 4, jedoch in einer isometrischen Darstellung aus einer rückwärtigen Ansicht.

Die Figuren zeigen in verschiedenen Ansichten und Betriebszuständen ein neuartig ausgebildetes Eingelenkscharnier für eine Vorrichtung zum Schutz von Personen bei einem Frontalaufprall auf ein Kraftfahrzeug durch aktives Aufstellen dessen Fronthaube im windschutzscheibenseitigen Scharnierbereich mittels eines Aufstellelementes ("Aktive Motorhaube"). Typischerweise ist zu beiden Seiten des Vorderwagens jeweils ein derartiges Eingelenkscharnier angeordnet.

Die Figuren zeigen jeweils nur das Eingelenkscharnier zusammen mit dem integrierten Aufstellelement. Alle anderen Elemente der Schutzvorrichtung, z.B. die Sensorik zum Erfassen eines drohenden Unfalles, sind nicht dargestellt. Sie werden durch entsprechende Komponenten aus dem Stand der Technik realisiert.

Das dargestellte Eingelenkscharnier weist zwei Scharnierflügel, einen unteren Scharnierflügel 1 und einen oberen Scharnierflügel 2 auf, die in einem karosseriefesten Scharniergelenk-Drehpunkt 3 verschwenkbar angelenkt sind. Der untere Scharnierflügel 1 weist einen horizontalen Befestigungsabschnitt 1 a mit Befestigungslöchern 1 b zum Anbringen an der Karosse des Vorderwagens und einen kufenförmig hochstehenden Fortsatz 1 c auf, an welchem die Achse 3 a des Scharniergelenks und im Drehpunkt 4 a ein Aufstellelement 4 angelenkt ist.

Der obere Scharnierflügel 2 ist weitgehend linear ausgebildet und weist im vorderen Abschnitt einen Befestigungsflansch 2 a mit Befestigungslöchern 2 b für die (nicht dargestellte) Fronthaube auf.

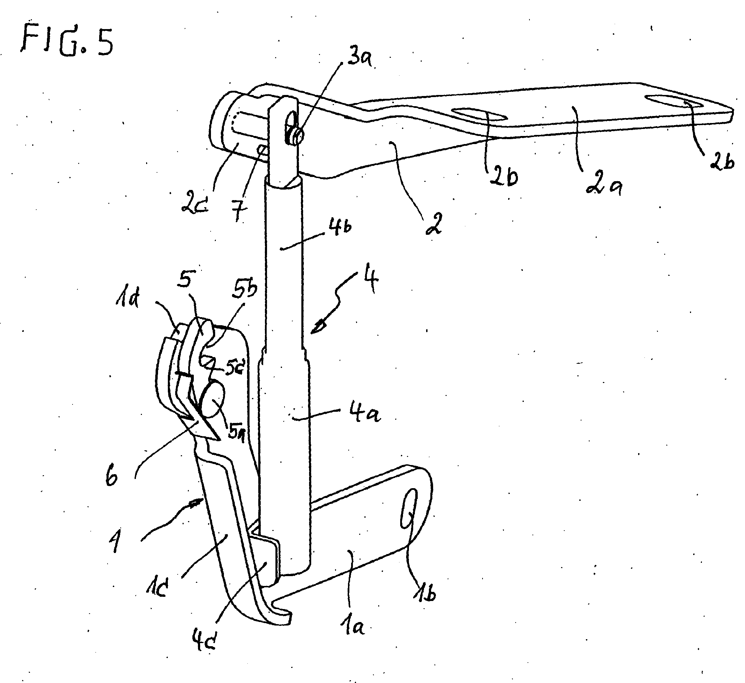

Das Aufstellelement 4 besteht im dargestellten Ausführungsbeispiel aus einem pyrotechnischen Aktuator 4 a mit einem beim Zünden des Aktuators ausstoßbaren Anhebestift 4 b. Der pyrotechnische Aktuator 4 a ist in einer becherartigen Aufnahme 4 c, die drehbar um den Drehpunkt 4 d am unteren Scharnierflügel 1 angelenkt ist, aufgenommen. Das freie Ende des Anhebestiftes 4 b weist ein Langloch 4 e auf, in welchem die Scharniergelenk-Achse 3 a, die in einem Lager 2 c am oberen Scharnierflügel 2 fest gelagert ist (Fig. 5), aufgenommen ist. Ein nicht dargestellter Sicherungsclip oder dergleichen sorgt dafür, dass sich die Scharniergelenk-Achse 3 a nicht axial verschieben kann und damit der Anhebestift 4 b sich nicht von der Scharniergelenk-Achse 3 a lösen kann. Diese Ausbildung des Aufstellelementes erspart eine gesonderte Haltevorrichtung für das Fixieren des Scharniers im normalen Ruhezustand.

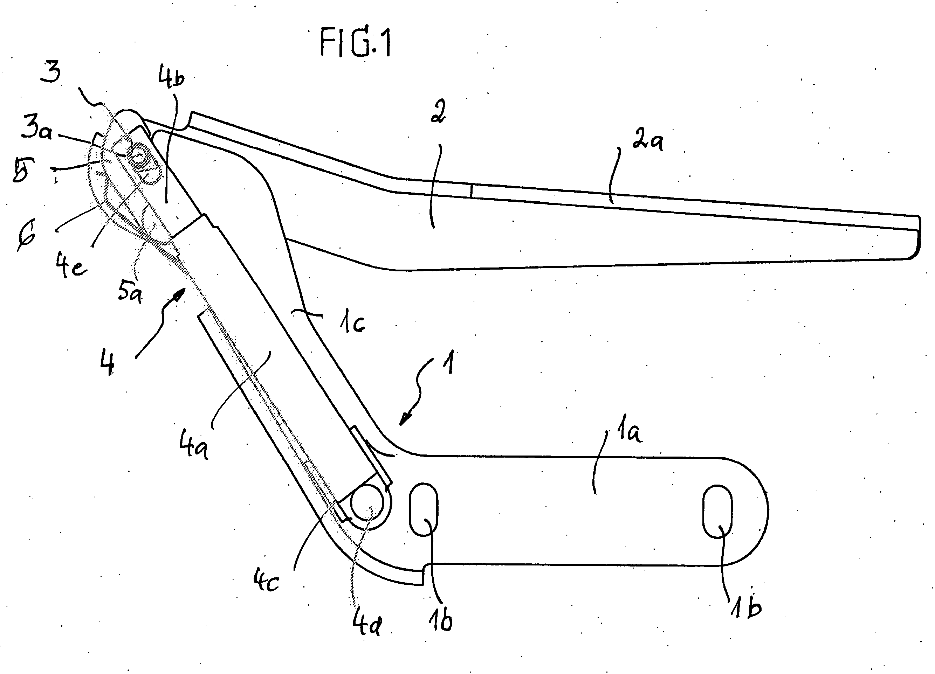

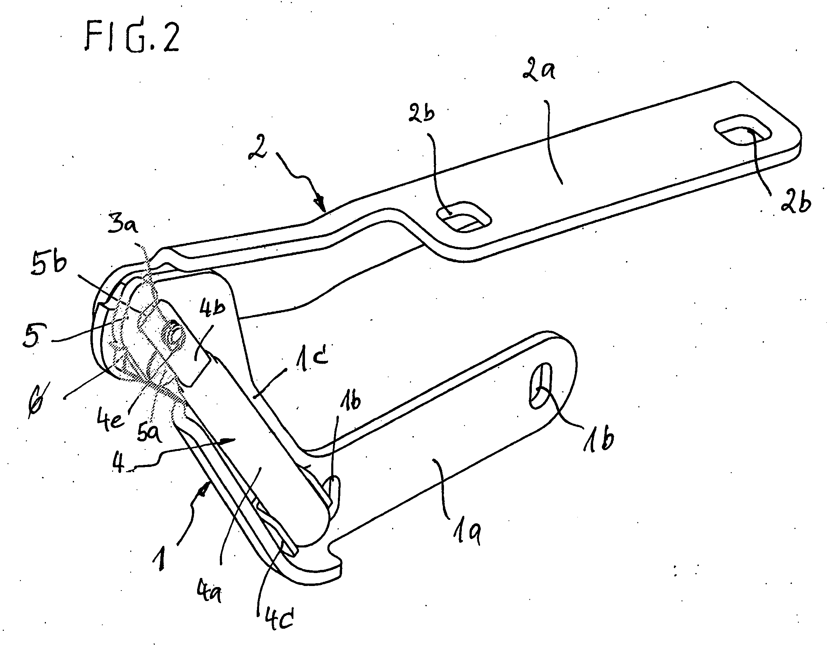

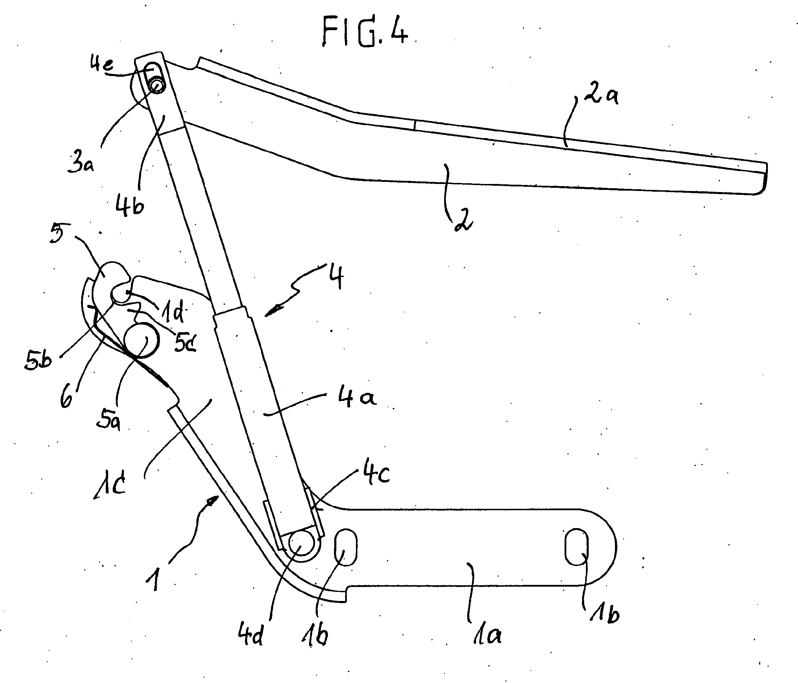

Am oberen Ende des kufenförmig hochstehenden Fortsatzes 1 c des unteren Scharnierflügels 1 ist eine Klinke 5 schwenkbar um den Drehpunkt 5 a angelenkt. Diese Klinke besitzt eine maulförmige Ausnehmung 5 b, welche im normalen Betriebszustand (Figuren 1 - 3) die Scharniergelenk-Achse 3 a zusammen mit einer Ausnehmung 1 d (Fig. 4) im unteren Scharnierflügel sperrend umgreift. Mittels einer Klinken-Blattfeder 6 ist die Klinke 5 dabei im Schließsinne vorgespannt.

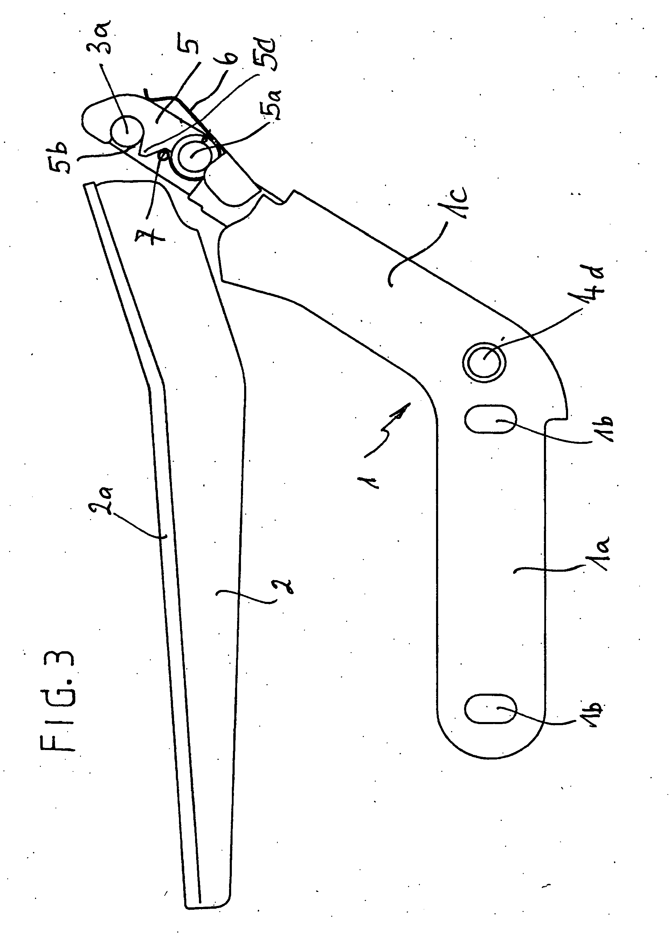

Am Kopf des Anhebestiftes 4 b ist ein stiftförmiger Entklinkungs-Bolzen 7 angebracht, der sich parallel zu der Scharniergelenk-Achse 3 a erstreckt (Figuren 3 und 5). Dieser Entklinkungs-Bolzen liegt im normalen Betriebszustand an einer Schräge einer Entklinkungs-Nase 5 c der Klinke 5 an. Beim Ausfahren des Anhebestiftes 4 b verschwenkt der Entklinkungs-Bolzen 7 über die Schräge der Entklinkungs-Nase 5 c die Klinke 5 im öffnenden Sinne, wodurch die Scharniergelenk-Achse 3 a freigegeben wird und der Anhebestift 4 b den oberen Scharnierflügel 2 samt Fronthaube in die Schutzposition gemäß den Figuren 4 und 5 anheben kann.

Die Abläufe für das Öffnen und Aufstellen der Fronthaube sind dabei wie folgt:
lm Ruhezustand (Figuren 1-3) umfasst die Klinke 5 die Scharniergelenk-Achse 3 a und wird in diesem verklinkten Zustand gehalten. Beim konventionellen manuellen Öffnen der Fronthaube in die Servicestellung dreht sich der obere Scharnierflügel 2 um die Scharniergelenk-Achse 3 a, ohne dass dabei die Klinke 5 in den entklinkten Zustand kommt, d.h. dass die Scharniergelenk-Achse 3 a nicht außer Wirkeingriff mit dem unteren Scharnierflügel 1 kommt.

Um die Fronthaube bei einem drohenden Personenaufprall in die Schutzstellung nach den Figuren 4 und 5 zu bringen, wird der pyrotechnische Aktuator 4 a durch ein Signal der nicht dargestellten Sensorik gezündet. Aufgrund des Langloches 4 e im Anhebestift 4 b kann dieser zunächst um einen kleinen Schalthub ausfahren. Dabei entsperrt der Entklinkungs-Bolzen 7 über die Schräge der Entklinkungs-Nase 5 c die Klinke 5, so dass die Scharniergelenk-Achse 3 a frei kommt und der Anhebestift 4 b den oberen Scharnierflügel 2 mit der Fronthaube in die Schutzposition aufstellen kann.

Um die Fronthaube zu reversieren, wird der Anhebestift 4 b aus der Stellung nach Fig. 4 nach unten gedrückt. Beim Auftreffen der Scharniergelenk-Achse 3 a auf die obere Schräge der Maulöffnung 5 b wird die Klinke 5 gegen den Uhrzeigersinn und gegen die Kraft der Klinken-Blattfeder 6 verschwenkt, wodurch die Scharniergelenk-Achse 3 a wieder gesichert in der Ausnehmung 1 d aufgenommen wird.

Wie die Figuren zeigen, wird durch die Erfindung eine Schutzvorrichtung mit einem Eingelenkscharnier und integriertem Aufstellelement geschaffen, welche aus relativ wenigen, unkomplizierten Bauteilen in einer sehr kompakten, einfachen Konstruktion besteht.

Es versteht sich, dass die dargestellte Konstruktion nur als Ausführungsbeispiel zu verstehen ist. Es können auch andere Aufstellelemente verwendet werden. Ebenso kann die lösbare Verriegelung der Scharniergelenk-Achse anstelle einer Verklinkung auch anders ausgebildet sein.

### Bezugszeichenliste

- 1: unterer Scharnierflügel
- 1 a: Befestigungsabschnit
- 1 b: Befestigungslöcher
- 1 c: kufenförmig hochstehender Fortsatz
- 1 d: Ausnehmung
- 2: oberer Scharnierflügel
- 2 a: Befestigungsflansch
- 2 b: Befestigungslöcher
- 2 c: Lager
- 3: Scharniergelenk-Drehpunkt
- 3 a: Scharniergelenk-Achse
- 4: Aufstellelement
- 4 a: pyrotechnischer Aktuator
- 4b: Anhebestift
- 4 c: becherförmige Aufnahme
- 4 d: Drehpunkt
- 4 e: Langloch
- 5: Klinke
- 5 a: Klinkendrehpunkt
- 5 b: maulförmige Öffnung
- 5 c: Entklinkungs-Nase
- 6: Klinken-Blattfeder
- 7: Entklinkungs-Bolzen

## Patentansprüche

1. Vorrichtung zum Schutz von Personen bei einem drohenden Aufprall auf die Fronthaube eines Kraftfahrzeuges, welche beidseitig jeweils über ein Eingelenkscharnier am Vorderwagen des Kraftfahrzeuges angeschlagen ist, das einen oberen, mit der Fronthaube verbundenen Scharnierflügel (2) und einen mit diesem über eine Scharniergelenk-Achse (3 a) gekoppelten unteren, am Vorderwagen befestigten Scharnierflügel (1), der eine Ausnehmung (1 d) für die, im Crashfall lösbare, Aufnahme der Scharniergelenk-Achse (3 a) besitzt, aufweist, und dem ein Aufstellelement (4), bestehend aus einem am unteren Scharnierflügel (1) angelenkten Aktuator (4 a) mit Energiespeicher und einem am oberen Scharnierflügel (2) angelenkten Hubelement (4 b) zum Anheben des oberen Scharnierflügels im Crashfall zugeordnet ist, wobei das Hubelement (4 b) kopfseitig direkt an der Scharniergelenk-Achse (3 a) angelenkt ist und die Aufnahme (1 d) der Scharniergelenk-Achse (3 a) im unteren Scharnierflügel (1) eine im Crashfall durch das aufstellende Hubelement selbsttätig lösbare Lagesicherung (5, 6) für die Scharniergelenk-Achse (3 a) aufweist, wobei das Aufstellelement (4) aus einem Aktuator (4 a) und aus einem im Aktuator ausstoßbar gehalterten Anhebestift (4 b) als Hubelement gebildet ist, **dadurch gekennzeichnet, dass** der Aktuator (4a) ein pyrotechnischer Aktuator ist und mit einem Ende an dem unteren Scharnierflügel (1) in einem Drehpunkt (4d) angelenkt ist.

2. Vorrichtung nach Anspruch 1, **dadurch gekennzeichnet, dass** die am oberen Scharnierflügel (2) an dessen windschutzseitigem Ende in einem Lager (2 c) angebrachte Scharniergelenk-Achse (3 a) als Rundbolzen ausgebildet ist, und kopfseitig im Hubelement (4 b) ein Langloch (4 e) vorgesehen ist, in welchem der Rundbolzen gesichert aufgenommen ist.

3. Vorrichtung nach Anspruch 2, **dadurch gekennzeichnet, dass** im Bereich der Ausnehmung (1 d) für die Aufnahme der Scharniergelenk-Achse (3 a) am unteren Scharnierflügel (1, 1 c) eine Klinke (5) als Lagesicherung angelenkt ist, welche eine maulförmige Öffnung (5 b) besitzt, die im Ruhezustand die in der Ausnehmung (1 d) gehalterte Scharniergelenk-Achse (3 a) sichernd umgreift.

4. Vorrichtung nach Anspruch 3, **dadurch gekennzeichnet, dass** der Klinke (5) eine in Sperrrichtung vorspannende Klinkenfeder zugeordnet ist.

5. Vorrichtung nach Anspruch 4, **dadurch gekennzeichnet, dass** die Klinkenfeder als Blattfeder (6) ausgebildet ist.

6. Vorrichtung nach einem der Ansprüche 3 bis 5, **dadurch gekennzeichnet, dass** an der Klinke (5) eine Entklinkungs-Nase (5 c) mit einer Schrägfläche angeformt ist, die in Wirkverbindung mit einem am Hubelement (4 b) angebrachten Entklinkungs-Bolzen (7) derart steht, dass beim Auslösen des Hubelementes (4 b) im Crashfall der Entklinkungs-Bolzen (7) selbsttätig beim Aufstellen die Klinke (5) entsichernd verschwenkt.

7. Vorrichtung nach Anspruch 6, **dadurch gekennzeichnet, dass** das untere Ende des Aktuators (4 a) in einer becherförmigen, am unteren Scharnierflügel (1) angelenkten Aufnahme (4 c) gelagert ist.

## Claims

1. Device for protecting persons in the case of an impending impact against the engine bonnet of a motor vehicle, wherein the device on both sides is attached respectively to the engine compartment of the motor vehicle by a single hinge, which comprises an upper hinge blade (2) connected to the engine bonnet and a lower hinge blade (1), which is coupled to the upper hinge blade (2) through a hinge axis (3a) and attached to the engine compartment of the motor vehicle, and which includes a recess (1d) for releasably receiving the hinge axis (3a) such that the hinge axis is released from the recess in the case of a crash and to which is associated a raising element (4), which consists of an actuator (4a) linked to the lower hinge blade (1) and including an energy storage and of a lift element (4b) linked to the upper hinge blade (2) for lifting the upper hinge blade in the case of a crash,
wherein the lift element (4b) at its head side is directly linked to the hinge axis (3a) and the recess (1d) for the hinge axis (3a) in the lower hinge blade (1) comprises an automatically releasable position securing means (5, 6) for the hinge axis (3a), which in the case of a crash is automatically releasable by the raising lift element,
wherein the raising element (4) is constituted by an actuator (4a) and a lift pin (4b) as lift element ejectably supported within the actuator,
**characterized in that**
the actuator (4a) is a pyrotechnical actuator and is linked at one end to the lower hinge blade (1) at a pivot (4d).

2. Device according to claim 1, **characterized in that** the hinge axis (3a) attached to the upper hinge blade (2) at its windshield side at a bearing (2c) is formed as a round bolt and an oblong hole (4e) in which the round bolt is safely received is provided within the lift element (4b) at its head side.

3. Device according to claim 2, **characterized in that** in the region of the recess (1d) for receiving the hinge axis (3a) a latch (5) as position securing means is linked to the lower hinge blade (1, 1c), wherein the latch comprises a mouth shaped orifice (5b), which in an inoperative state securingly encompasses the hinge axis (3a) supported within the recess (1d).

4. Device according to claim 3, **characterized in that** a latch spring biased in a locking direction is associated to the latch (5).

5. Device according to claim 4, **characterized in that** the latch spring is formed as a leaf spring (6).

6. Device according to any one of claims 3 to 5, **characterized in that** the latch (5) is formed with an unlatching nose (5c) comprising an inclined face, which is operatively connected to an unlatching bolt (7) attached to the lift element (4b) such that, when the lift element (4b) is released in the case of a crash the unlatching bolt (7) automatically pivots and releases the securing means when the latch (5) is raised.

7. Device according to claim 6, **characterized in that** the lower end of the actuator (4a) is mounted in a cup shaped receptacle (4c) linked to the lower hinge blade (1).

## Revendications

1. Dispositif de protection de personnes en cas de menace d'impact sur le capot avant d'un véhicule automobile, monté de manière articulée de chacun de deux côtés, par l'intermédiaire d'une charnière à articulation, sur l'avant du véhicule automobile, présentant un battant de charnière supérieur (2), relié au capot avant, et un battant de charnière inférieur (1), fixé à l'avant de voiture, couplé à celui-ci par l'intermédiaire d'un axe d'articulation de charnière (3a), comprenant un évidement (1d) pour le logement, désolidarisable en cas de collision, de l'axe d'articulation de charnière (3a), et auquel est associé un élément de dressage (4), composé d'un actionneur (4a) articulé sur le battant de charnière inférieur (1), avec un accumulateur d'énergie et d'un élément de levage (4b) articulé sur le battant de charnière supérieur (2), pour lever le battant de charnière supérieur en cas de collision, l'élément de levage (4b) étant directement articulé, côté tête, à l'axe d'articulation de charnière (3a), et le logement (1d) de l'axe d'articulation de charnière (3a) présentant, pour l'axe d'articulation de charnière (3a), dans le battant de charnière inférieur (1), une sécurité de position (5, 6), désolidarisable automatiquement au moyen de l'élément de levage se dressant en cas de collision, l'élément de dressage (4) étant formé d'un actionneur (4a) et d'une tige de levage (4b) faisant office d'élément de levage, maintenue, de façon à pouvoir être éjectée, dans l'actionneur, **caractérisé en ce que** l'actionneur (4a) est un actionneur pyrotechnique et est articulé, par une extrémité, sur le battant de charnière inférieur (1), dans un point d'articulation (4d).

2. Dispositif selon la revendication 1, **caractérisé en ce que** l'axe d'articulation de charnière (3a), monté sur le battant de charnière supérieur (2), à son extrémité située côté pare-brise, dans un palier (2c), est réalisé sous forme de pêne rond et, côté tête, est prévu dans l'élément de levage (4b) un trou oblong (4e), dans lequel le pêne rond est logé de façon assurée.

3. Dispositif selon la revendication 2, **caractérisé en ce que,** dans la zone de l'évidement (1d) pour le logement de l'axe d'articulation de charnière (3a), sur le battant de charnière inférieur (1, 1c) est articulé un cliquet (5) faisant office de sécurité de position, comportant une ouverture (5b) en forme de gueule, entourant à l'état de repos, en le retenant, l'axe d'articulation de charnière (3a) maintenu dans l'évidement (1d).

4. Dispositif selon la revendication 3, **caractérisé en ce qu'**un ressort de cliquet, précontraignant dans le sens de fermeture, est associé au cliquet (5).

5. Dispositif selon la revendication 4, **caractérisé en ce que** le ressort de cliquet est réalisé sous forme de ressort à lame (6).

6. Dispositif selon l'une des revendications 3 à 5, **caractérisé en ce que** sur le cliquet (5) est formé un saillant de déclic (5c) muni d'une surface oblique, en liaison fonctionnelle avec un ergot de déclic (7) monté sur l'élément de levage (4b) de manière que, lors du déclenchement de l'élément de levage (4b) en cas de collision, l'argot de déclic (7) fasse pivoter automatiquement, avec effet d'abandon de la retenue, le cliquet (5) lors du dressage.

7. Dispositif selon la revendication 4, **caractérisé en ce que** l'extrémité inférieure de l'actionneur (4a) tourillonne dans un logement (4c) en forme d'étui, articulé sur le battant de charnière inférieur (1).
